Europäisches Patentamt

European Patent Office

Office européen des brevets

(11) Veröffentlichungsnummer: **0 339 451**
A2

# EUROPÄISCHE PATENTANMELDUNG

(21) Anmeldenummer: **89106996.5**

(22) Anmeldetag: **19.04.89**

(51) Int. Cl.⁴: **C09K 3/18**

(30) Priorität: **28.04.88 DE 3814456**

(43) Veröffentlichungstag der Anmeldung:
**02.11.89 Patentblatt 89/44**

(84) Benannte Vertragsstaaten:
**AT BE CH DE ES FR GB IT LI NL SE**

(71) Anmelder: **Henkel Kommanditgesellschaft auf Aktien**
**Postfach 1100 Henkelstrasse 67**
**D-4000 Düsseldorf 1(DE)**

(72) Erfinder: **Höfer, Rainer, Dr.**
**Kleverstrasse 31**
**D-4000 Düsseldorf 30(DE)**
Erfinder: **Krampitz, Dieter**
**Zeppelinstrasse 29**
**D-4050 Mönchengladbach 1(DE)**

(54) **Verwendung von nichtionischen Tensiden zur Verhinderung des Beschlagens von Kunststoffoberflächen sowie diese Tenside enthaltende Mittel.**

(57) Die Verwendung von bei Umgebungstemperatur flüssigen, nichtionischen Tensiden mit HLB-Werten von 2 bis weniger als 13, insbesondere 2 bis weniger als 12 zur Verhinderung des Beschlagens von Kunstostoffoberflächen ergibt einen wirksamen abwaschresistenten Beschlagschutz.

EP 0 339 451 A2

## Verwendung von nichtionischen Tensiden zur Verhinderung des Beschlagens von Kunststoffoberflächen sowie diese Tenside enthaltende Mittel.

Die Erfindung betrifft die Verwendung von bei Umgebungstemperatur flüssigen, nichtionischen Tensiden mit HLB-Werten von 2 bis weniger als 13, insbesondere 2 bis weniger als 12 zur Verhinderung des Beschlagens von Kunststoffoberflächen.

Es ist bekannt, daß sich auf Kunststoffoberflächen, z.B. auf Verpackungsfolien aus Weich-PVC, sehr leicht aus Wasserdampf eine Vielzahl von einzelnen Tröpfchen ausbildet, die nicht zu einem geschlossenen Wasserfilm zusammenlaufen. Im Falle von Weich-PVC-Folien, die z.B. für Frischfleisch- oder Frischobstverpackungen eingesetzt werden, beschreiben die US-C 3 479 308, FR-C 1 569 130 sowie die JA-A 75 40 643, 79 86 545 und 78 69 247 verschiedene Lösungen dieses Problems. Dabei werden als sogenannte Antibeschlagmittel beispielsweise hochethoxylierte Sorbitanmonooleate eingesetzt. Diese Problemlösung läßt sich jedoch auf Kunststoffverglasungen in Gewächshäusern, auf Terrassen oder dergleichen nicht übertragen.

Durch die im Vergleich zu Glas verstärkte Bildung von Wassertröpfchen auf Oberflächen oder auch im Inneren von Doppelstegplatten aus Polymethylmethacrylat oder aus Polycarbonat wird die Lichtdurchlässigkeit von Kunststoffverglasungen aus den vorgenannten Polymeren erheblich reduziert und damit in Gewächshäusern der Pflanzenwuchs beeinträchtigt. Der Tropfbelag wird aesthetisch als unschön empfunden, und das Abfallen von Tropfen kann auf den Blütenblättern empfindlicher Zuchtpflanzen zu unerwünschter Fleckenbildung führen.

Es hat in der Vergangenheit nicht an Versuchen gefehlt, das Problem des Beschlagens von Kunststoffverglasungen in den Griff zu bekommen. Dabei wurde überwiegend vorgeschlagen, die Oberfläche der Kunststoffverglasungen mit einer gut haftenden, filmbildenden Beschichtung zu versehen, vgl. DE-A 3129 262, EP-A 149 182 sowie der dort beschriebene ältere Stand der Technik.

Das Aufbringen einer gut zur Benetzung mit Wasser neigenden Beschichtung erfordert jedoch einen gesonderten Arbeitsgang. Zudem wäre z.B. bei Doppelstegplatten die Beschichtung der inneren Oberflächen der Hohlkammern technisch kaum zu realisieren.

Die Erfindung ist daher auf ein extern applizierbares Mittel zur Verhinderung des Beschlagens von Kunststoffoberflächen, insbesondere von Kunststoffverglasungen auf Basis von Polymethylmethacrylat oder Polycarbonat, gerichtet, das nicht als feste, filmbildende Beschichtung aufgebracht wird, sondern in flüssiger Form auf die Oberfläche applizierbar ist, z.B. mittels eines Tuches, durch Einsprühen oder dergleichen.

Diese Aufgabe wird erfindungsgemäß dadurch gelöst, daß man die eingangs genannten, bei Umgebungstemperatur flüssigen, nichtionischen Tenside mit HLB-Werten von 2 bis weniger als 13, insbesondere 2 bis weniger als 12 einsetzt.

Die erfindungsgemäße Lösung hat für den Erzeuger der Kunststoffe den Vorteil, daß keine gesonderten Fertigungsstraßen für die Beschichtung von Kunststoffoberflächen, z.B. nach der Extrusion, eingerichtet werden müssen. Für die Anwender ergibt sich zudem der Vorteil der einfachen Applikation, die in beliebig gesteuerten Intervallen wiederholt werden kann, wobei in einem Arbeitsgang mechanisch anhaftender Schmutz entfernt wird.

Da das Beschlagen von Kunststoffoberflächen auf die Oberflächenspannung von Wasser gegenüber Kunststoffen zurückgeht, sollten Produkte, die allgemein aus Waschmittelformulierungen als gute Netzmittel bekannt sind, sich als Antibeschlagmittel eignen. Überraschenderweise hat sich jedoch gezeigt, daß diese handelsüblichen Produkte zwar erwartungsgemäß eine gute Netzwirkung entfalten, jedoch innerhalb kürzester Zeit, z.B. durch Regenwasser oder Kondenswasser, abgewaschen werden. Die gleiche Problematik trit mit bekannten externen, antistatisch wirkenden Mitteln wie Paraffinsulfonat, Alkyletherphosphaten oder quaternären Ammoniumverbindungen auf. Auch die in PVC-Folien wirksamen ethoxylierten Sorbitanester erweisen sich als wirkungslos bzw. zu wenig wirksam, da sie bereits nach sehr kurzer Zeit erneut appliziert werden müssen.

Die erfindungsgemäß zu verwendenden, bei Umgebungstemperaturen flüssigen, nichtionischen Tenside mit HLB-Werten von 2 bis weniger als 13, insbesondere 2 bis weniger als 12 zeigen zwar eine oberflächenaktive Wirkung, werden jedoch überraschenderweise auch beim mehrfachen Beregnen mit Wasser nicht oder nur sehr langsam von den Kunststoffverglasungen entfernt.

Unter HLB-Werten sind dabei die nach Griffin ermittelten HLB-Zahlen zu verstehen, vgl. N. Schönfeldt, "Grenzflächenaktive Ethylenoxid-Addukte", Wissenschaftliche Verlagsgesellschaft mbH Stuttgart 1976, S. 209-218.

Im Rahmen der Erfindung bevorzugte, bei Umgebungstemperaturen flüssige, nichtionische Tenside mit HLB-Werten von 2 bis weniger als 13, insbesondere 2 bis weniger als 12 sind im folgenden zusammengefaßt:

1. Anlagerungsprodukte von 1 bis 6 Mol Ethylenoxid an 1 Mol geradkettige oder verzweigte, gesättigte oder ungesättigte Fettalkohol einer Kettenlänge von 8 bis 18 Kohlenstoffatomen;

2. Anlagerungsprodukte von 1 bis 7 Mol Ethylenoxid und 1 bis 4 Mol Propylenoxid an 1 Mol geradkettige oder verzweigte, gesättigte oder ungesättigte Fettalkohole einer Kettenlänge von 8 bis 18 Kohlenstoffatomen;

3. Anlagerungsprodukte von 1 bis 8 Mol Ethylenoxid an 1 Mol geradkettige oder verzweigte, gesättigte oder ungesättigte Fettalkohole mit einer Kettenlänge von 8 bis 18 Kohlenstoffatomen, endgruppenverschlossen durch Veretherung mit geradkettigen oder verzweigten Alkylgruppen mit 1 bis 6 Kohlenstoffatomen (zur Nomenklatur der sogenannten "Mischether" vgl. R. Piorr, R. Höfer, H.J. Schlüßler, K.H. Schmid, Fett.-Wiss. Technologie/Fat Sci. Techn. 89 (3), 108 -111 (1987);

4. Anlagerungsprodukte von 1 bis 6 Mol Ethylenoxid an 1 Mol geradkettige oder verzweigte, gesättigte oder ungesättigte Fettamine einer Kettenlänge von 8 bis 18 Kohlenstoffatomen;

5. Anlagerungsprodukte von 1 bis 7 Mol Ethylenoxid und 1 bis 4 Mol Propylenoxid an 1 Mol geradkettige oder verzweigte, gesättigte oder ungesättigte Fettamine einer Kettenlänge von 8 bis 18 Kohlenstoffatomen;

6. Anlagerungsprodukte von 1 bis 8 Mol Ethylenoxid an 1 Mol geradkettige oder verzweigte, gesättigte oder ungesättigte Fettamine einer Kettenlänge von 8 bis 18 Kohlenstoffatomen, endgruppenverschlossen durch Veretherung mit geradkettigen oder verzweigten Alkylgruppen mit 1 bis 6 Kohlenstoffatomen;

7. Anlagerungsprodukte von 1 bis 6 Mol Ethylenoxid oder 1 bis 7 Mol Ethylenoxid und 1 bis 4 Mol Propylenoxid an Alkylphenole mit 1 bis 3 Alkylgruppen mit jeweils 4 bis 12 Kohlenstoffatomen;

8. Anlagerungsprodukte von 1 bis 8 Mol Ethylenoxid an Alkylphenole mit 1 bis 3 Alkylgruppen mit jeweils 4 bis 12 Kohlenstoffatomen, endgruppenverschlossen durch Veretherung mit geradkettigen oder verzweigten Alkylgruppen mit 1 bis 6 Kohlenstoffatomen;

9. Ester, insbesondere Partialester, von gesättigten oder ungesättigten, geradkettigen oder verzweigten Fettsäuren mit 8 bis 24 Kohlenstoffatomen mit Di- bzw. Polyglycerin;

10. Diester von gesättigten oder ungesättigten geradkettigen oder verzweigten Fettsäuren mit 8 bis 24 Kohlenstoffatomen mit Zahlenmittel der Molmassen zwischen 44 und 600 aufweisenden Polyethylenglykolen, Polypropylenglykolen oder gemischten Ethylenoxid/Propylenoxid-Blockcopolymeren.

Die vorstehend genannten nichtionischen Tenside sind handelsübliche Produkte. Besonders bevorzugt im Rahmen der Erfindung sind die wegen ihrer Schaumarmut und der besonders guten biologischen Abbaubarkeit unter 3. genannten Produkte, gegebenenfalls in Mischung mit den unter 1, 2, 4, 5, 6 und/oder 7 genannten Produkte.

Die im Zusammenhang mit den nichtionischen Tensiden gemäß den Ziffern Nr.1 bis 3 der obigen Aufstellung genannten Fettalkoholderivate leiten sich von Fettalkoholen synthetischer und insbesondere natürlicher Herkunft ab; letztere werden aus natürlichen, pflanzlichen und/oder tierischen Fetten hergestellt. Typischer Vertreter dieser Fettalkohole sind Capryl-, Caprin-, Lauryl-, Myristyl-, Cetyl-, Stearyl-, Oleyl-, Elaidyl-, Ricinol-, Linoleyl- und Linolenylalkohol. Wie in der Tensidchemie im allgemeinen üblich, leiten sich die in Betracht gezogenen Alkylenoxid-Anlagerungspunkte zumeist nicht von Einzelverbindungen, sondern von technischen Fettalkoholgemischen des angegebenen Kettenlängenbereiches ab. Typische Vertreter für verzweigte Fettalkohole sind die sogenannten Guerbet-Alkohole.

Die unter den Nr.4 bis 6 der obigen Aufzählung genannten Fettamine leiten sich von den den oben erwähnten Fettalkoholen analogen Fettaminen ab.

Typische Vertreter der Phenole, von denen sich die unter den obigen Nr.7 und 8 erwähnten Alkylarylderivate ableiten sind $C_9$-Alkylphenole, $C_8$-Alkylphenole, $C_{12}$-Alkylphenole, 2,4,6-Tributylphenol, benzylsubstituierte Phenole, phenoxy-substituierte Phenole und dergleichen.

Die den unter den Nr.9 und 10 genannten Fettsäurederivaten zugrundeliegenden Fettsäuren mit 8 bis 24 Kohlenstoffatomen sind ebenfalls synthetischer oder insbesondere natürlicher Herkunft; letztere sind ebenfalls aus tierischen und/oder natürlichen Fetten zugänglich. Typische Vertreter für diese Fettsäuren sind Capryl-, Caprin-, Laurin-, Myristin-, Palmitin-, Stearin-, Laurolein-, Myristolein-, Palmitolein-, Öl-, Gadolein-, Eruca-, Behen-, Ricinol-, Linol- und Linolensäure, weiterhin verzweigte Fettsäuren wie Isostearin- und Isopalmitinsäure und dergleichen. Wie in der Tensidchemie üblich, leiten sich die geeigneten Fettsäure-mono- und -diester von technischen Fettsäuregemischen des vorgenannten Kettenlängenbereichs ab.

Sofern in der obigen Aufstellung gemischt alkoxylierte Tenside angesprochen sind, können sich die

3

Ethylenoxid- und Propylenoxideinheiten in einer Block- oder random-Verteilung in der Polyalkylenoxidkette befinden.

Die im Zusammenhang mit den Tensiden Nr.3, 6 und 8 genannten Alkylgruppen mit 1 bis 6 Kohlenstoffatomen können insbesondere Methyl-, Ethyl-, Propyl-, Butyl-, Pentyl- und/oder Hexylgruppen sein.

Die Erfindung betrifft weiterhin ein Mittel für die Verhinderung des Beschlagens von Kunststoffoberflächen, enthaltend 1 bis 10 Gew.-Teile von bei Umgebungstemperatur flüssigen, nichtionischen Tensiden mit HLB-Werten von 2 bis weniger als 13, insbesondere 2 bis weniger als 12, 50 - 90 Gew.-Teile von mit Wasser mischbaren Lösemitteln für die nichtionischen Tenside sowie gegebenenfalls 5 bis 20 Gew.-Teile Wasser. Als mit Wasser mischbare Lösemittel eignen sich insbesondere niedere Alkohole, insbesondere Ethanol, n-Propanol sowie i-Propanol.

Die Erfindung wird im folgenden anhand von bevorzugten Ausführungsbeispielen sowie Testergebnissen einschließlich solcher mit Vergleichsverbindungen erhaltenen näher erläutert.

Prüfung der Antibeschlagwirkung.

Testlösungen.

Für den Test wurden Lösungen von jeweils 3 g Antibeschlagmittel (Tensid) in 97 g Alkohol-Wasser-Gemisch, bestehend aus 10 Gew.-Teilen Wasser, 20 Gew.-Teilen Ethanol und 70 Gew.-Teilen Isopropanol, eingesetzt.

PPMA-Prüfkörper.

Als Prüfkörper dienten PMMA-Stegdoppelplatten mit einer Fläche von 600 cm² (20 x 30 cm). Alle Platten wurden vor der Prüfung mit Wasser und Alkohol gereinigt.

Applikation.

Stofflappen wurden mit den einzelnen Testlösungen getränkt und damit die PMMA-Platten gleichmäßig von einer Seite eingerieben.

Durchführung.

Die präparierten PMMA-Platten wurden in einem Winkel von ca. 60° aufgestellt und dann mit Wasser besprüht (Sprühflasche). Beurteilt wurde das Ablaufverhalten bzw. das Anhaften der Wassertröpfchen nachfolgendem Schema:

+ + + = Transparente Platte ohne sichtbare Wassertröpfchen
+ + = Einzelne zufällig zerstreute Tropfen
+ = Zufällig zerstreute oder nur große transparente Tropfen
- = Opake Schicht vieler kleiner Tröpfchen
Spülung.

Nach jeder Antibeschlagbeurteilung wurden die PMMA-Platten einzeln unter fließendes Wasser gelegt und innerhalb von einer Minute mit einer Menge von 10 Litern abgespült. Insgesamt wurden vier Wasserbehandlungen durchgeführt.

Es wurden die in Tabelle 1 aufgeführten Tenside getestet. Der Test Nr.1 betrifft einen Blindversuch ohne Tensidzusatz; die Tests Nr.2 - 11 betreffen erfindungsgemäß einzusetzende Tenside und die Tests Nr.12 - 23 Vergleichsversuche mit handelsüblichen Tensiden mit HLB-Werten von über 13. Die hinter den Tensiden angegebenen Zahlen in Klammern sind die HLB-Werte für die getesteten Tenside.

Die Testergebnisse sind in Tabelle 2 zusammengefaßt.

Tabelle 1

| Test Nr. 1 | Blindversuch |
|---|---|
| 2 | Laurylalkohol + 3 EO (8,0) |
| 3 | Laurylalkohol + 4 EO (9,5) |
| 4 | $C_{12}/C_{18}$-Fettalkohol + 3 EO (7,8) |
| 5 | Laurylalkohol + 5 EO n-Butylether (9,4) |
| 6 | Laurylalkohol + 7 EO n-Butylether (11,0) |
| 7 | Laurylamin + 2 EO (6,2) |
| 8 | Polyethylenglykol-400-dilaurat (10,2) |
| 9 | Polypropylenglykol-700-distearat (8,3) |
| 10 | Diglycerin-$C_8$-$C_{10}$-fettsäureester (11,9) |
| 11 | Mischung aus 50% Laurylalkohol + 5 EO n-Butylether und 50% Nonylphenol + 4 EO (9,3) |
| 12 | sek. Alkansulfonat (größer als 20) |
| 13 | Alkylphenol + 20 EO-phosphat (größer als 20) |
| 14 | Sorbitanmonolaurat (17,0) |
| 15 | Sorbitanmonolaurat + 4 EO (13,3) |
| 16 | Sorbitanmonooleat + 20 EO (15,0) |
| 17 | Nonylphenol + 10 EO (13,4) |
| 18 | Octylphenol + 43 EO (17,8) |
| 19 | handelsübliches Tensidgemisch für Geschirrspülmittel (größer als 20) |
| 20 | Polyethylenglykol-4000-distearat (17,5) |

# Tabelle 2

| Tensid Nr. | Antibeschlagwirkung | | | | |
|---|---|---|---|---|---|
| | Start | 1.Spülung | 2.Spülung | 3.Spülung | 4.Spülung |
| 1 | – | – | – | – | – |
| 2 | +++ | +++ | ++ | + | – |
| 3 | +++ | ++ | ++ | + | – |
| 4 | +++ | ++ | ++ | + | – |
| 5 | +++ | +++ | ++ | ++ | + |
| 6 | +++ | +++ | ++ | + | – |
| 7 | +++ | +++ | ++ | + | – |
| 8 | +++ | +++ | ++ | + | – |
| 9 | +++ | +++ | ++ | ++ | + |
| 10 | +++ | ++ | + | – | – |
| 11 | +++ | +++ | +++ | ++ | ++ |
| 12 | + | + | – | – | – |
| 13 | + | + | – | – | – |

(fortgesetzt)

EP 0 339 451 A2

## Tabelle 2 (Fortsetzung)

### Antibeschlagwirkung

| Tensid Nr. | Start | 1.Spülung | 2.Spülung | 3.Spülung | 4.Spülung |
|---|---|---|---|---|---|
| 14 | + | - | - | - | - |
| 15 | ++ | + | - | - | - |
| 16 | - | - | - | - | - |
| 17 | + | - | - | - | - |
| 18 | + | - | - | - | - |
| 19 | + | + | - | - | - |
| 20 | + | - | - | - | - |

Beurteilung der Antibeschlagwirkung auf PMMA-Stegdoppelplatten

+++ = Transparente Platte ohne sichtbare Wassertröpchen
++ = Einzelne zufällig zerstreute Tropfen
+ = Zufällig zerstreute oder nur große transparente Tropfen
- = Opake Schicht vieler kleiner Tröpfchen

## Ansprüche

1. Verwendung von bei Umbegungstemperatur flüssigen, nichtionischen Tensiden mit HLB-Werten von 2 bis weniger als 13, insbesondere 2 bis weniger als 12 zur Verhinderung des Beschlagens von Kunststoffoberflächen.

2. Verwendung nach Anspruch 1, dadurch gekennzeichnet, daß die bei Umgebungstemperatur flüssigen, nichtionischen Tenside Anlagerungsprodukte von 1 bis 6 Mol Ethylenoxid an 1 Mol geradkettige oder verzweigte, gesättigte oder ungesättigte Fettalkohole einer Kettenlänge von 8 bis 18 Kohlenstoffatomen sind.

3. Verwendung nach Anspruch 1, dadurch gekennzeichnet, daß die bei Umgebungstemperatur flüssigen, nichtionischen Tenside Anlagerungsprodukte von 1 bis 7 Mol Ethylenoxid und 1 bis 4 Mol Propylenoxid an 1 Mol geradkettige oder verzweigte, gesättigte oder ungesättigte Fettalkohole einer Kettenlänge von 8 bis 18 Kohlenstoffatomen sind.

4. Verwendung nach Anspruch 1, dadurch gekennzeichnet, daß die bei Umgebungstemperatur flüssigen, nichtionischen Tenside Anlagerungsprodukte von 1 bis 8 Mol Ethylenoxid an 1 Mol geradkettige oder verzweigte, gesättigte oder ungesättigte Fettalkohole einer Kettenlänge von 8 bis 18 Kohlenstoffatomen, endgruppenverschlossen durch Veretherung mit geradkettigen oder verzweigten Alkylgruppen mit 1 bis 6 Kohlenstoffatomen, sind.

5. Verwendung nach Anspruch 1, dadurch gekennzeichnet, daß die bei Umgebungstemperatur flüssigen, nichtionischen Tenside Anlagerungsprodukte von 1 bis 6 Mol Ethylenoxid an 1 Mol geradkettige oder verzweigte, gesättigte oder ungesättigte Fettamine einer Kettenlänge von 8 bis 18 Kohlenstoffatomen sind.

6. Verwendung nach Anspruch 1, dadurch gekennzeichnet, daß die bei Umgebungstemperatur flüssigen, nichtionischen Tenside Anlagerungsprodukte von 1 bis 7 Mol Ethylenoxid und 1 bis 4 Mol Propylenoxid an 1 Mol geradkettige oder verzweigte, gesättigte oder ungesättigte Fettamine einer Kettenlänge von 1 bis 18 Kohlenstoffatomen sind.

7. Verwendung nach Anspruch 1, dadurch gekennzeichnet, daß die bei Umgebungstemperatur flüssigen, nichtionischen Tenside Anlagerungsprodukte von 1 bis 8 Mol Ethylenoxid an 1 Mol geradkettige oder verzweigte, gesättigte oder ungesättigte Fettamine einer Kettenlänge von 8 bis 18 Kohlenstoffatomen, endgruppenverschlossen durch Veretherung mit geradkettigen oder verzweigten Alkylgruppen mit 1 bis 6 Kohlenstoffatomen, sind.

8. Verwendung nach Anspruch 1, dadurch gekennzeichnet, daß die bei Umgebungstemperatur flüssigen, nichtionischen Tenside Anlagerungsprodukte von 1 bis 6 Mol Ethylenoxid oder 1 bis 7 Mol Ethylenoxid und 1 bis 4 Mol Propylenoxid an 1 Mol Alkylphenole mit 1 bis 3 Alkylgruppen mit jeweils 4 bis 12 Kohlenstoffatomen, sind.

9. Verwendung nach Anspruch 1, dadurch gekennzeichnet, daß die bei Umgebungstemperatur flüssigen, nichtionischen Tenside Anlagerungsprodukte von 1 bis 8 Mol Ethylenoxid an 1 Mol Alkylphenole mit 1 bis 3 Alkylgruppen mit jeweils 4 bis 12 Kohlenstoffatomen, endgruppenverschlossenen durch Veretherung mit geradkettigen oder verzweigten Alkylgruppen mit 1 bis 6 Kohlenstoffatomen sind.

10. Verwendung nach Anspruch 1, dadurch gekennzeichnet, daß die bei Umgebungstemperatur flüssigen, nichtionischen Tenside Ester, insbesondere Partialester, von gesättigten oder ungesättigten, geradkettigen oder verzweigten Fettsäuren mit 8 bis 24 Kohlenstoffatomen mit Di- bzw. Polyglycerin sind.

11. Verwendung nach Anspruch 1, dadurch gekennzeichnet, daß die bei Umgebungstemperatur flüssigen, nichtionischen Tenside Diester von gesättigten oder ungesättigten, geradkettigen oder verzweigten Fettsäuren mit 8 bis 24 Kohlenstoffatomen mit Zahlenmitteln der Molmassen zwischen 44 und 600 aufweisenden Polyethylenglykolen, Polypropylenglykolen oder gemischten Ethylenoxid/Propylenoxid-Blockcopolymeren sind.

12. Mittel für die Verhinderung des Beschlagens von Kunststoffoberflächen, gekennzeichnet durch einen Gehalt an 1 bis 10 Gew.-Teilen von bei Umgebungstemperatur flüssigen, nichtionische Tensiden gemäß einer der Ansprüchen 1 bis 11, 50 bis 90 Gew.-Teilen von mit Wasser mischbaren Lösemitteln für die nichtionischen Tenside sowie gegebenenfalls 5 bis 20 Gew.-Teilen Wasser.

13. Mittel nach Anspruch 12, dadurch gekennzeichnet, daß die mit Wasser mischbare Lösemittel Ethanol und/oder Propanol sind.